# EUROPÄISCHE PATENTSCHRIFT

(11) **EP 0 564 970 B1**
(45) Veröffentlichungstag und Bekanntmachung des Hinweises auf die Patenterteilung: **24.11.1999**
(21) Anmeldenummer: 93105322.7
(22) Anmeldetag: 31.03.1993
(51) Int. Cl.: G01N 35/00, B01L 9/00, B65G 1/04

(54) **Reagenzien-Kit und Analysengerät, in dem er verwendbar ist**
Reagent kit and analyser in which it may be used
Nécessaire à réactifs et analyseur l'utilisant

(30) Priorität: 09.04.1992 CH 116592
(43) Veröffentlichungstag der Anmeldung: 13.10.1993
(60) Teilanmeldung: 99201191.6
(73) Patentinhaber: F. HOFFMANN-LA ROCHE AG, 4002 Basel (CH)
(72) Erfinder: Koch, Bruno, CH-6330 Cham (CH); Schacher, Gottlieb, CH-6030 Ebikon (CH)
(74) Vertreter: Ventocilla, Abraham

(56) Entgegenhaltungen:
- EP-A- 0 192 968
- EP-A- 0 223 002
- EP-A- 0 252 471
- WO-A-80/00690
- DE-A- 3 016 605
- US-A- 4 338 279
- US-A- 5 031 797
- PATENT ABSTRACTS OF JAPAN vol. 016, no. 251 (P-1366)8. Juni 1992 & JP-A-04 058 157 (FUJIREBIO INC) 25. Februar 1992
- PATENT ABSTRACTS OF JAPAN vol. 12, no. 48 (P-666)13. Februar 1988 & JP-A-62 195 560 (NIPPON TECTRON CO LTD) 28. August 1987
- PATENT ABSTRACTS OF JAPAN vol. 10, no. 264 (P-495)(2320) 9. September 1986 & JP-A-61 088 159 (OLYMPUS OPTICAL CO LTD) 6. Mai 1986

## Beschreibung

Die Erfindung betrifft einen Reagenzien-Kit, der wenigstens einen Behälter enthält, in dem ein Reagenz enthalten ist, wobei jeder Reagenzbehälter mit einem Verschluss geschlossen ist, der durch die Pipettiernadel der Pipettiervorrichtung des Analysengerätes durchstechbar ist, wobei die durchstechbare Stelle des Verschlusses sich aber nach Entfernung der Pipettiernadel wiederschliesst.

Es ist aus der U.S. Patentschrift Nr. 5,031,797 ein Gefäss bekannt, das drei Kammer zur Aufnahme von Reagenzien enthält. Jede dieser Kammer ist ein Reagenzbehälter, der mit einem Verschluss geschlossen ist, der durch die Pipettiernadel durchstechbar ist.

Es sind ferner aus der EP-A-0192968 einzelne Reagenzbehälter bekannt. Jeder dieser Reagenzbehälter ist mit einem Verschluss geschlossen ist, der durch die Pipettiernadel durchstechbar ist. Auf der Bodenwand jedes dieser Reagenzbehälter ist eine machinenlesbare Etikette angebracht.

In automatischen Analysengeräten ist eine vollautomatische Behandlung von Reagenzien- Kits erwünscht, d.h. zur Verwendung der Reagenzien-Kits sollten keine manuell durchgeführte Handlungen notwendig sein. Die Lösung dieser Aufgabe wird dadurch erschwert, dass die Reagenzbehälter vor deren ersten Benutzung im Analysengerät und zwischen Pipettiervorgängen mit einem Verschluss verschlossen sein sollten, um Reagenzverluste bzw. eine zu kurze Brauchbarkeitsdauer der Reagenzien zu vermeiden.

In automatischen Analysengeräten, in dem eine Vielzahl von Reagenzbehältern mit verschiedenen Reagenzien und eine Vielzahl von Reaktionsgefässen mit verschiedenen Proben vorhanden sind, ist ferner erwünscht, dass die Pipettiervorrichtung einen frei gewählten Zugang ("random access")zu einem beliebigen Reagenzbehälter bzw. zu einem beliebigen Reaktionsgefäss hat

Der Erfindung liegt daher die Aufgabe zugrunde, einen Reagenzien-Kit zur Verfügung zu stellen, mit denen die oben erwähnten Ziele erreicht werden können.

Erfindungsgemäss wird diese Aufgabe mit einem Reagenzien-Kit gelöst, der dadurch gekennzeichnet ist, dass er sich im wesentlichen aus einem quaderförmigen Gehäuse, das einen Boden, Seitenwände und einen abnehmbaren Deckel hat, und in dem Gehäuse enthaltenen abnehmbaren Reagenzbehältern zusammensetzt, wobei der Deckel Oeffnungen aufweist, durch die die Inhalte der Reagenzbehälter für automatisch durchgeführte Pipettiervorgänge zugänglich sind,
wobei der Deckel Stege hat, die dazu geeignet sind, von einem zu einer Transportvorrichtung gehörenden Greifer gegriffen zu werden, und wobei der Boden und der Deckel des Gehäuses einander gegenüberliegenden Oeffnungen besitzen, die Luftzirkulation durch das Gehäuse und um die darin enthaltenen Behälter ermöglichen.

Der Hauptvorteil, der mit dem erfindungsgemässen Reagenzien-Kit erzielt wird, liegt darin, dass dieser ermöglicht, die oben erwähnten, gewünschten Eigenschaften eines solchen Kits zu einem relativ niedrigen Preis zu erreichen.

Eine bevorzugte Ausführungsform des erfindungsgemässen Reagenzien-Kits ist ausserdem dadurch gekennzeichnet, dass eine der Seitenwände des Gehäuses eine maschinenlesbare Etikette trägt. Dadurch wird die automatische Erkennung und Bearbeitung des Kits erleichtert.

Eine weitere bevorzugte Ausführungsform des erfindungsgemässen Reagenzien-Kits ist dadurch gekennzeichnet, dass der Deckel vorgestanzte Stellen hat, die mit einem Dorn geöffnet werden können. Dies erm^glicht die Markierung des Kits als gebrauchter Kit durch Durchstechen der vorgestanzte Stellen.

Ein Ausführungsbeispiel der Erfindung wird im folgenden anhand der beiliegenden Zeichnungen beschrieben. Es zeigen:
- Fig. 1: eine perspektivische Ansicht eines erfindungsgemässen Reagenzien-Kits 11,
- Fig. 2: einen Reagenzien-Kit 11 gemäss Fig. 1 und einen Dorn 67 zur Prüfung bzw. zur Oeffnung der vorgestanzten Stelle 56 des Deckels 18 des Reagenzien-Kits 11,
- Fig. 3 und 4: verschiedene Ansichten des Reagenzien-Kits 11 gemäss Fig. 1,
- Fig. 5: einen schematischen Querschnitt des Reagenzien-Kits 11 gemäss Fig. 1,
- Fig. 6: eine Ansicht, teilweise im Querschnitt, eines der Verschlusse 34-36 in Fig. 5,
- Fig. 7: eine Ansicht, teilweise im Querschnitt, des Deckels 81 in Fig. 6,
- Fig. 8: einen Querschnitt des Stopfens 91 in Fig. 6,
- Fig.9: eine Ansicht, teilweise im Querschnitt, des Verschlusses 34 gemäss Fig. 6 und eines darin eingesetzten Dorns 67,
- Fig. 10: eine Ansicht, teilweise im Querschnitt, des Verschlusses 34 gemäss Fig. 6 und einer dadurch eingeführten Pipettiernadel 101, und
- Fig.11: eine perspektivische Ansicht eines Analysengerätes in dem das erfindungsgemässe Reagenzien-Kit verwendbar ist,

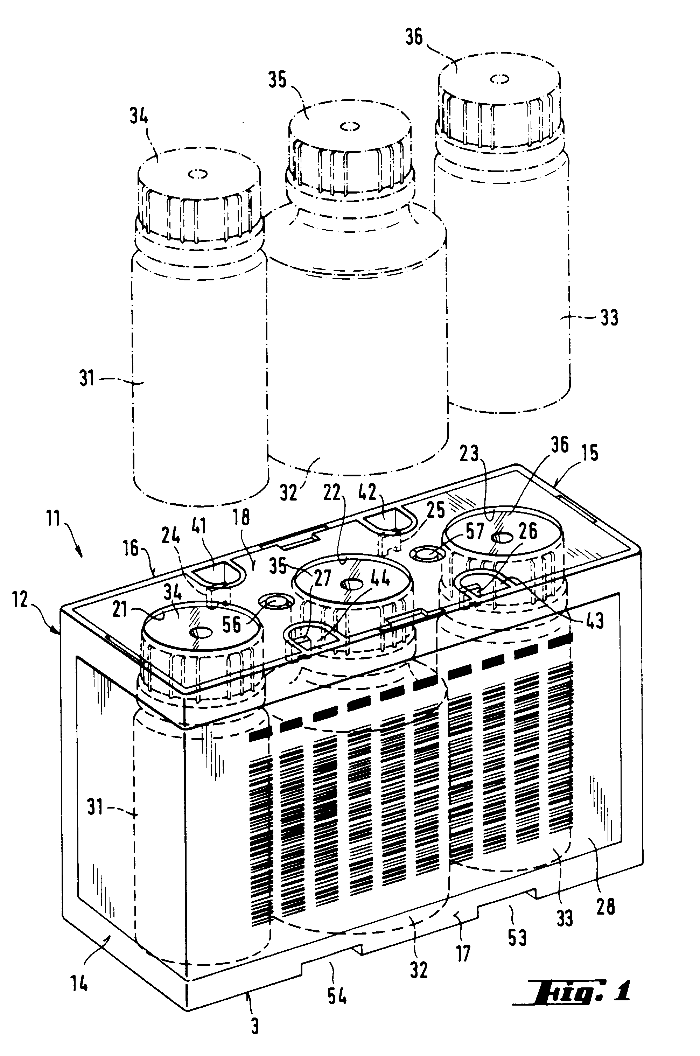

Wie in Fig. 1 dargestellt, setzt sich ein erfindungsgemässer Reagenzien-Kit 11 im wesentlichen aus einem quaderförmigen Gehäuse 12 und aus Behältern 31, 32, 33 zusammen, die in dem Gehäuse 12 angeordnet werden. Das Gehäuse 12, das aus einem geeigneten Kunststoff, z.B. Polystyrol, hergestellt wird, hat einen Boden 13, Seitenwände 14, 15, 16, 17 und einen abnehmbaren Deckel 18. Der Deckel 18 weist Oeffnungen 21, 22, 23 auf, durch die die Inhalte der Reagenzbehälter 31, 32, 33 für automatisch durchgeführte Pipettiervorgänge zugänglich sind. Jeder der Reagenzbehälter ist mit einem Verschluss 34, 35, 36 geschlossen, der durch die Pipettiernadel 101 der Pipettiervorrichtung des Analysengerätes durchstechbar ist, der sich aber nach Entfernung der Pipettiernadel wiederschliesst. Die Verschlüsse 34, 35, 36 sind vorzugsweise Verschlüsse gemäss der EP-A 0 504 697 A1.

Das Gehäuse 12 kann z.B. mit folgenden Kombinationen von Reagenzbehältern bestückt werden:
- Für einen Test mit 3 Komponenten: ein Behälter mit 25 ml von einem Reagenz R1, ein Behälter mit 12,5 ml von einem Reagenz R2, und ein Behälter mit 12,5 ml von einem Referenzserum.
- Für einen Test mit 2 Komponenten: ein Behälter mit 25 ml von einem Reagenz R1, ein Behälter mit 12,5 ml vom Reagenz R1, und ein Behälter mit 12,5 ml von einem Referenzserum.
- Für einen Test mit einer Komponente: ein Behälter mit 25 ml von einem Reagenz R1 und ein oder zwei Behälter mit 12,5 ml vom Reagenz R1.

Die Reagenzbehälter 31, 32, 33 können aus Kunststoff oder aus Glas sein.

Das Gehäuse 12 hat in ihrem oberen Teil Stege 24, 25, 26, 27, die dazu geeignet sind, von einem zu einer Transportvorrichtung gehörenden Greifer 66 gegriffen zu werden.

Eine der Seitenwände des Gehäuses, z.B. Seitenwand 17 trägt eine maschinenlesbare Etikette 28.

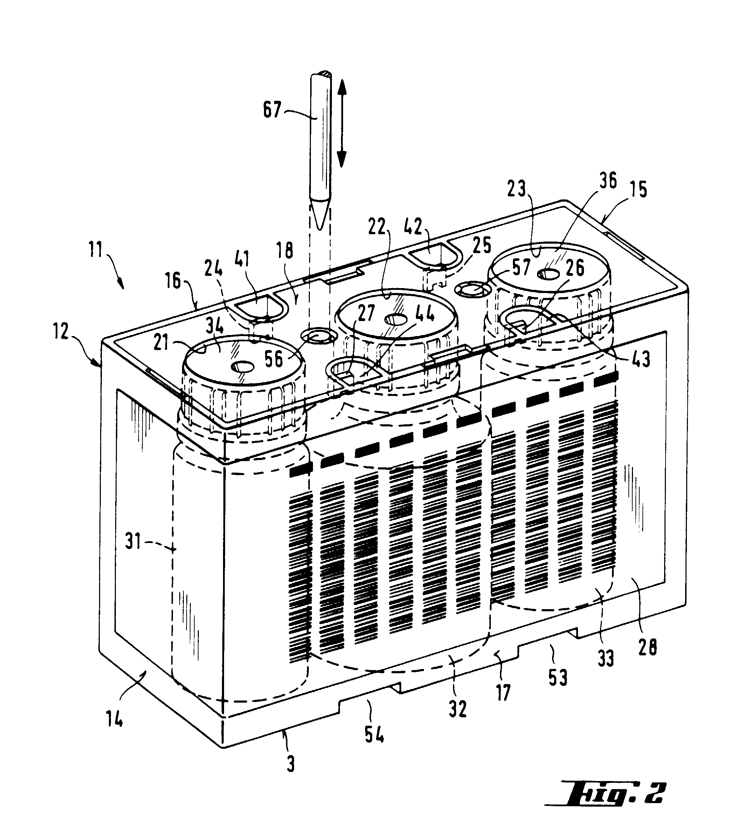

Wie aus Figuren 1 und 2 ersichtlich, hat der Deckel 18 vorgestanzte Stellen 56, 57 die mit einem Dorn 67 geöffnet werden können.

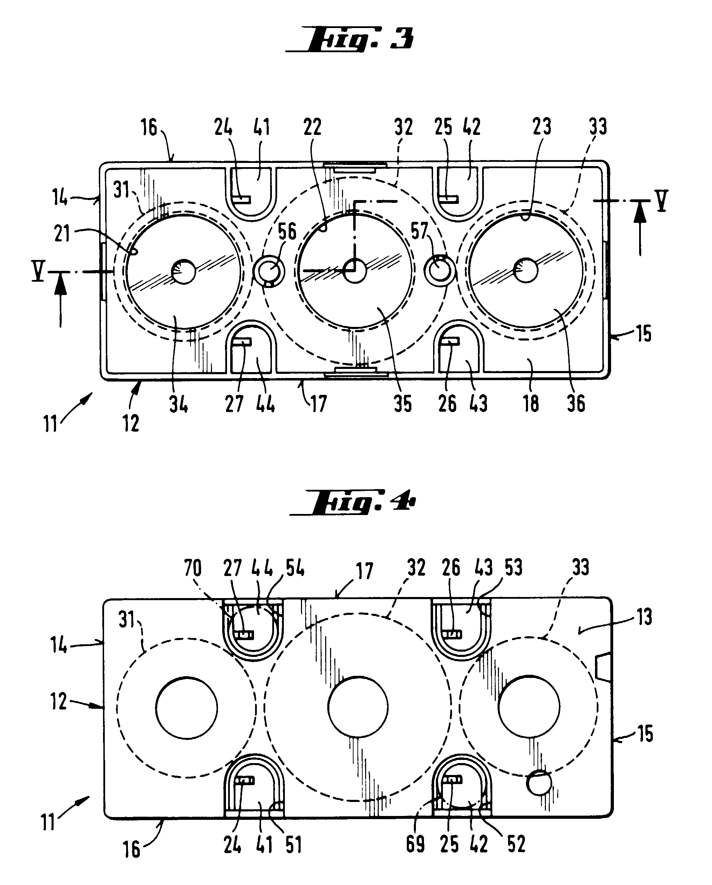

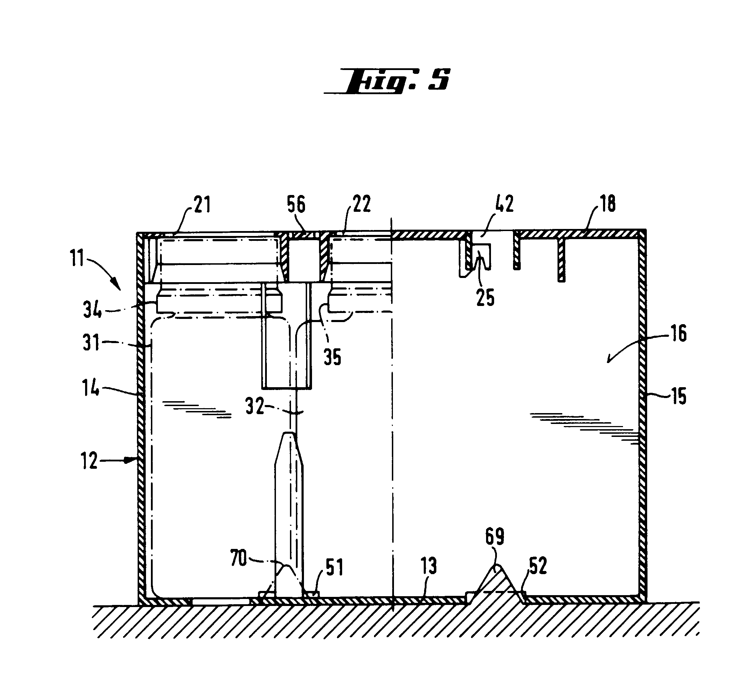

Wie aus Figuren 3-5 ersichtlich, besitzen der Boden 13 und der Deckel 18 des Gehäuses 12 einander gegenüberliegenden Oeffnungen 41-44 bzw. 51-54, die Luftzirkulation durch den Innenraum des Gehäuses 12 und um die darin enthaltenen Behälter 31, 32, 33 ermöglichen. Dadurch wird eine gleichmässige Kühlung der Reagenzbehälter im Reagenzien-Kit ermöglicht (siehe nachstehender Hinweis auf die Kühlung der Trägerplatte 62 in Fig. 11).

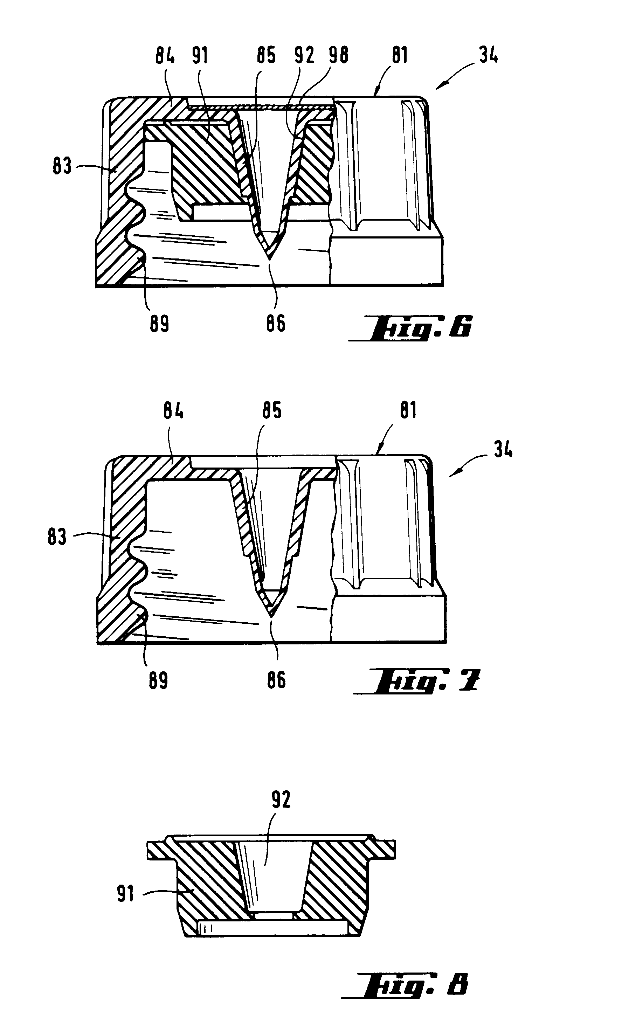

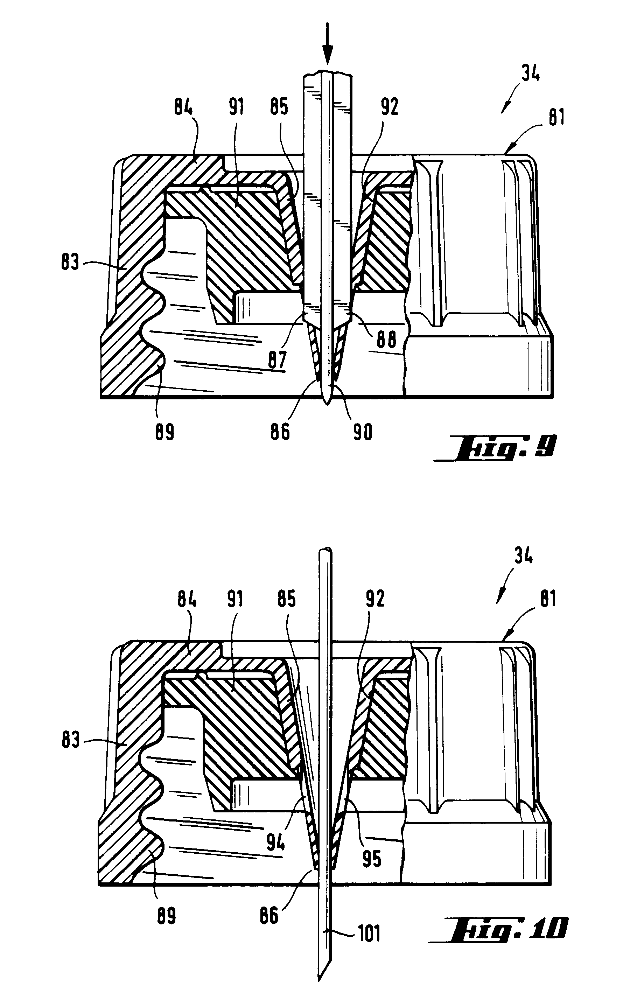

Die Verschlüsse 34-36 in Fig. 1 haben den gleichen Aufbau. Der Aufbau des Verschlusses 34 wird nachstehend anhand der Figuren 6-8 beschrieben. Wie in Fig. 6 gezeigt, setzt sich der Verschluss 34 im wesentlichen aus einem Deckel 81 gemäss Fig. 7 und einem Stopfen 91 gemäss Fig. 8, der zwischen dem Deckel 81 und dem Behälter als Abdichtung einsetzbar ist.

Der Deckel 81 gemäss Fig. 7 ist ein aus einem Kunststoff in einem Stück geformten Teil. Er hat eine zylindrische Seitenwand 83 und eine ringförmige, an der Seitenwand angrenzende obere Wand 84, die in eine kegelförmige Wand 85 übergeht, die sich vom inneren Kreis der oberen Wand nach innen erstreckt und in einer auf der Symmetrieachse der zylindrischen Wand liegenden Spitze 86 endet, die z.B. durch die Pipettiernadel einer automatischen Pipettiervorrichtung durchstechbar ist. Einen ersten, an der oberen Wand 84 angrenzenden Teil der kegelförmigen Wand 85 bildet mit der Symmetrieachse der zylindrischen Seitenwand 83 einen 10° Winkel. Die kegelförmige Wand 85 hat einen zweiten Teil, der die Spitze 86 der kegelförmigen Wand bildet, und der mit der Symmetrieachse der zylindrischen Seitenwand 83 einen 30° Winkel bildet.

Der Deckel 81 ist ein Schraubverschluss, der in seiner Seitenwand 83 ein Innengewinde 89 hat, der einem Aussengewinde im Hals des (nicht gezeigten) Reagenzbehälters entspricht, der mit dem Verschluss 34 verschlossen wird.

Der Zugang zur kegelförmigen Wand 85 ist vorzugsweise mit einer metallischen Siegelfolie 98 abgedichtet.

Der Stopfen 91 gemäss Fig. 8 hat in der Mitte einen Durchgang 92, dessen Form der Aussenfläche der kegelförmigen Wand 85 des Deckels so angepasst ist, dass wenn der Behälter mit dem Stopfen 91 und dem Deckel 81 verschlossen wird, die Aussenfläche der kegelförmigen Wand 85 sich gegen die Innenwand des Durchgangs 92 des Stopfens 91 abdichtend anlegt.

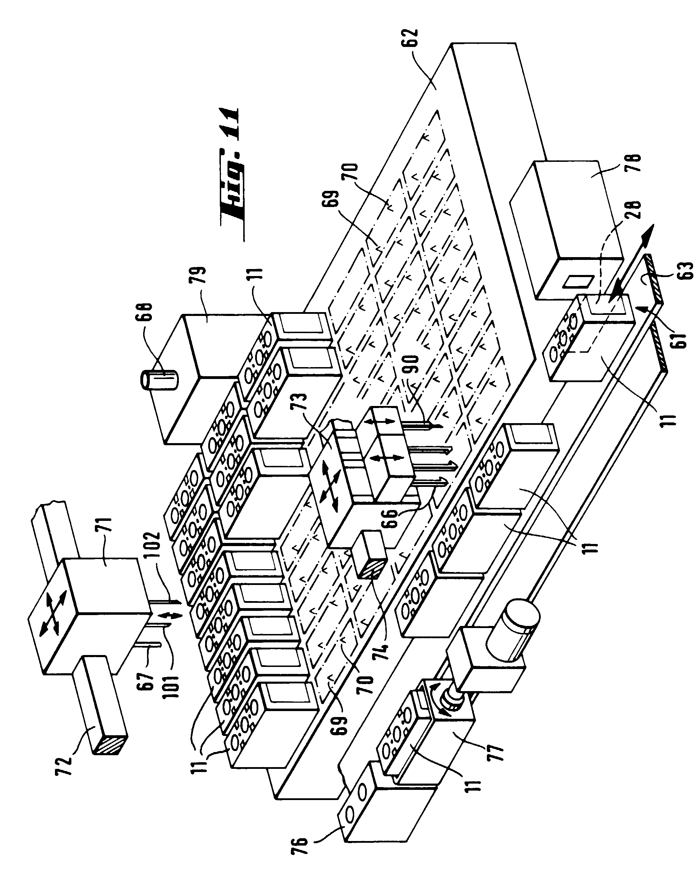

Die Benutzung des Verschlusses 34 gemäss Fig. 6 wird nachstehend anhand der Figuren 9 und 10 beschrieben.

Wie in Fig. 9 gezeigt wird die Spitze 86 der kegelförmigen Wand 85 mit der Spitze eines Dorns 90 durchgestochen, der Schneideflügel 87, 88 hat. Dabei schneiden die unteren scharfen Kanten der Schneideflügel 87, 88 in den unteren Teil der kegelförmigen Wand 85 ein. Nach Entfernung des Dorns 90 weist die kegelförmige Wand 85 Schlitze 94,95 zur Entlüftung auf.

Wie in Fig. 10 gezeigt, kann nun eine Pipettiernadel durch die von dem Dorn 90 hinterlassene zentrale Oeffnung an der Spitze 86 der kegelförmigen Wand 85 in den Reagenzbehälter eingeführt werden, z.B. um ein bestimmtes Volumen eines dort enthaltenen flüssigen Reagenz zu entnehmen.

Wie anhand der Fig. 11 nachstehend beschrieben, ist ein erfindungsgemässer Reagenzien-Kit 11 in einem automatischen Analysengerät verwendbar, in dem eine Vielzahl solcher Reagenzien-Kits aufgenommen werden können. Wie in der Fig. 11 dargestellt, enthält ein solches Analysengerät folgende Komponenten:
- eine Eingabestelle 61 zur Eingabe neuer Reagenzien-Kits 11,
- eine Ausgabestelle 61 zur Ausgabe verbrauchter Reagenzien-Kits 11,
- eine Trägerplatte 62, auf der im Analysengerät aufgenommenen Reagenzien-Kits 11 matrixartig angeordnet werden, wobei Vorsprünge 69,70 zur genauen Positionierung vorgesehen sind,
- eine Transportvorrichtung zum Transport der Reagenzien-Kits 11 von der Eingabestelle zur Trägerplatte 62 bzw. von der Trägerplatte zur Ausgabestelle und nach Bedarf auch zu weiteren Positionen innerhalb des Analysengerätes, und
- eine automatische Pipettiervorrichtung mit der die im Analysengerät erforderlichen Pipettierungen durchgeführt werden.

Eine zentrale, in der Fig. 11 nicht gezeigten Steuereinrichtung steuert sämtliche Funktionen im Analysengerät.

Die Trägerplatte 62 wird mit einer nicht gezeigten Kühlvorrichtung gekühlt. Auf diese Weise und durch die oben erwähnte Luftzirkulation durch die Gehäuse 12 der Reagenzien-Kits wird eine gleichmässige Kühlung der darin enthaltenen Reagenzien erreicht.

Im Ausführungsbeispiel gemäss Fig. 11 wird die gleiche Stelle 61 sowohl als Eingabestelle als auch als Ausgabestelle verwendet. In diesem Fall ist zur Information der Bedienungsperson eine Anzeige des Status der Stelle 61 erforderlich, die angibt, ob die Stelle für die Eingabe von Reagenzien-Kits frei ist, oder ob sie besetzt ist. Getrennte Ein- bzw. Ausgabestellen sind jedoch auch möglich.

An der Eingabestelle 61 können bis 5 Reagenzien-Kits gleichzeitig eingegeben werden. Aufgebrauchte Reagenzien-Kits werden automatisch zur Ausgabestelle zurückgebracht und dort ausgegeben.

Wie aus Fig. 11 ersichtlich, enthält das Analysengerät eine an der Eingabestelle 61 angeordnete Lesevorrichtung 78 zum Lesen maschinenlesbarer Information, z.B. in Form eines Strichkodes, die von einer Etikette 28 getragen wird, die auf die Seite 17 des Reagenzien-Kits 11 angebracht ist. Die Information auf der Etikette 28 wird beim Einschieben des Reagenzien-Kits in die Eingabestelle durch die Lesevorrichtung 78 automatisch gelesen. Die von der Etikette in maschinenlesbarer Form getragene Information enthält die Identifikation des mit dem Reagenzien- Kit durchführbaren Tests und lotabhängigen Parameter.

Die Transportvorrichtung zum Transport der Reagenzien-Kits 11 enthält insbesondere ein Förderband 63 und einen Greifer 66, der vom Transportwagen 73 der Pipettiernadel einer automatischen Pipettiereinrichtung eines Analysengeräts geführt wird. Der Transportwagen 73 trägt neben dem Greifer 66 zwei Pipettiernadeln (diese werden aber der Uebersichtlichkeit halber in Fig. 11 nicht gezeigt) und beispielsweise einen Dorn 90 zum Bearbeiten der Wand 85.

Der Transportwagen 73 und eine Stange 74, auf die der Wagen 73 fährt, gehören zur Transporteinrichtung einer automatischen Pipettiereinrichtung des Analysengeräts. Diese Transporteinrichtung dient hauptsächlich dazu, die Pipettiernadel entlang drei zueinander senkrechten Richtungen, zu einer Vielzahl von Pipettierpositionen zu bringen.

In der Ausführungsform gemäss Fig. 11 ist eine zweite automatischen Pipettiereinrichtung vorgesehen, die ebenfalls eine Transporteinrichtung für Pipettiernadel 101, 102 enthält. Diese Transporteinrichtung enthält einen Transportwagen 71 und eine Stange 72, auf die der Wagen 71 fährt. Der Transportwagen 71 trägt neben der Pipettiernadel 101, 102 einen Dorn 67, der, wie nachstehend beschrieben, zur Entwertung neuer Reagenzien-Kits im Analysengerät bzw. zur Prüfung des Zustands der dem Analysensystem zugeführten Reagenzien-Kits verwendet wird.

Bei den soeben erwähnten Pipettierungen werden unter anderem bestimmte Reagenzvolumina aus den Reagenzbehältern 31, 32, 33 entnommen und zu bestimmten Reaktionsgefässen 68 übertragen, die je eine zu untersuchende Probe enthalten. Während seiner ganzen Benutzungsdauer im Analysengerät ist jeder der Reagenzbehälter 31, 32, 33 mit einem Verschluss 34, 35 bzw. 36 geschlossen, der durch die Pipettiernadeln 101,102 der Pipettiervorrichtung durchstechbar ist.

Das Analysengerät gemäss Fig. 11 enthält eine Einrichtung, mit der die Unversehrtheit der in das Analysengerät aufgenommenen Reagenzien-Kits 11 geprüft werden kann. Diese Prüfeinrichtung besteht im wesentlichen aus dem in Fig. 11 dargestellten Dorn 67, der vom Transportwagen 71 der Pipettiernadel 101, 102 getragen wird, und der mit einer nicht gezeigten Fühleinrichtung zusammenwirkt. Zur Prüfung der Unversehrtheit eines Reagenzien-Kits 11 wird der Dorn 67 von einem geeigneten Antrieb gegen eine der vorgestanzten Stellen 56, 57 im Deckel des Reagenzien-Kits 11 geführt. Trifft der Dorn 67 diese Stelle geschlossen, wird dies als Bestätigung der Unversehrtheit des Reagenzien-Kits 11 erfasst. Daraufhin wird diese Stelle durch einen geeigneten, mit dem Dorn ausgeübten Druck geöffnet, um den Reagenzien-Kit zu entwerten. Trifft der Dorn hingegen die vorgestanzte Stelle offen, wird dies als Kennzeichen eines Reagenzien- Kits erfasst, der bereits entwertet ist, und deshalb nicht verwendet werden sollte. Ist dies der Fall, wird der Reagenzien-Kit von der Transportvorrichtung zur Ausgabestelle gebracht.

Wie aus Fig. 11 ersichtlich, enthält das Analysengerät eine Bearbeitungsstation 77, in der eine Schwenkbewegung oder eine rollartige Bewegung eines dort angeordneten Reagenzien-Kits durchführbar ist. Zu dieser Bearbeitungsstation wird ein Reagenzien-Kit vor seinem erstmaligen Gebrauch automatisch gebracht, wenn er einen Reagenzbehälter mit einem Reagenz in lyophilisierter Form enthält. Ein solcher Behälter wird vorher durch einen Pipettiervorgang mit einer geeigneten Menge Wasser gefüllt. Anschliessend wird der Reagenzien-Kit, der einen solchen Behälter enthält, durch den von der Transportvorrichtung bewegten Greifer 66 von seiner Position auf der Trägerplatte 62 zur Bearbeitungsstation 77 gebracht. Durch Schwenkbewegungen des Reagenzien-Kits 11 während ca. 10 Minuten wird dort eine wirksame Mischung und dadurch eine vollständige Auflösung der zu lösenden Reagenzien erzielt. Alle in einem Reagenzien-Kit enthaltenen Reagenzien werden im gleichen Zeitraum aufgelöst. Nach der Auflösung der Reagenzien eines Reagenzien-Kits 11 in der Bearbeitungsstation 77 wird der Reagenzien-Kit zurück zu seiner Position auf der Trägerplatte 62 gebracht.

Nach Bedarf kann auch über die Steuerorgane des Analysengerätes veranlasst werden, dass bestimmte Reagenzien-Kits periodisch zum Nachmischen zur Bearbeitungsstation 77 gebracht werden, z.B. täglich.

Nach der soeben beschriebenen Auflösung von Reagenzien in lyophilisierter Form findet die oben erwähnte Entwertung des Reagenzien-Kits statt. Bei Reagenzien-Kits, die nur flüssige Reagenzien enthalten und deshalb keines Auflösungsvorgangs bedürfen, findet im entsprechenden Zeitpunkt der Behandlung des Reagenzien-Kits nur das Entwerten desselben statt.

Neben der Bearbeitungsstation 77 befindet sich eine Waschstation 76 für die Pipettiernadeln.

Während des Betriebes des Analysengeräts werden wahlweise Reagenzvolumina aus einem der auf der Trägerplatte 62 vorhandene Reagenzien-Kits 11 entnommen und einem Reaktionsgefäss 68 in einer Bearbeitungsstation 79 für Probe-Reagenz-Gemische zugeführt.

## Patentansprüche

1. Reagenzien-Kit, der wenigstens einen Behälter enthält, in dem ein Reagenz enthalten ist, wobei jeder Reagenzbehälter mit einem Verschluss (34, 35, 36) geschlossen ist, der durch die Pipettiernadel der Pipettiervorrichtung des Analysengerätes durchstechbar ist, wobei die durchstechbare Stelle des Verschlusses sich aber nach Entfernung der Pipettiernadel wiederschliesst,
welcher Reagenzien-Kit dadurch gekennzeichnet, dass er sich im wesentlichen aus einem quaderförmigen Gehäuse (12), das einen Boden (13), Seitenwände (14, 15, 16, 17) und einen abnehmbaren Deckel (18) hat, und in dem Gehäuse (12) enthaltenen abnehmbaren Reagenzbehältern (31, 32, 33) zusammensetzt,
wobei der Deckel (18) Oeffnungen (21, 22, 23) aufweist, durch die die Inhalte der Reagenzbehälter (31, 32, 33) für automatisch durchgeführte Pipettiervorgänge zugänglich sind,
wobei der Deckel (18) Stege (24, 25, 26, 27) hat, die dazu geeignet sind, von einem zu einer Transportvorrichtung gehörenden Greifer (66) gegriffen zu werden, und
wobei der Boden (13) und der Deckel (18) des Gehäuses (12) einander gegenüberliegende Oeffnungen (41-44, bzw. 51-54) besitzen, die Luftzirkulation durch das Gehäuse (12) und um die darin enthaltenen Behälter (31, 32, 33) ermöglichen.

2. Reagenzien-Kit gemäss Anspruch 1, dadurch gekennzeichnet, dass eine der Seitenwände (14, 15, 16, 17) des Gehäuses (12) eine maschinenlesbare Etikette (28) trägt.

3. Reagenzien-Kit gemäss Anspruch 1, dadurch gekennzeichnet, dass der Deckel (18) vorgestanzte Stellen (56, 57) hat, die mit einem Dorn (67) geöffnet werden können.

## Claims

1. A reagent kit comprising at least one container holding a reagent, each reagent container being closed by a closure which is apt to be perforated by the pipetting needle of the pipetting device of the analyser, the perforated location of the closure being apt to reclose, however, after the pipetting needle is removed,
characterised in that
the reagent kit is essentially composed of a cuboid casing (12) having a bottom (13), side walls (14, 15, 16, 17), and a removable lid (18), and of removable reagent containers (31, 32, 33) contained in the casing,
the lid (18) having openings (21, 22, 23) through which the contents of the reagent containers (31, 32, 33) are accessible for automatically effected pipetting operations,
the lid (18) comprising webs (24, 25, 26, 27) which are adapted to be seized by a gripper (66) belonging to a transport device, and
the bottom (13) and the lid (18) of the casing (12) having openings (41 - 44, resp. 51 - 54) which face each other and allow the circulation of air through the casing (12) and around the containers (31, 32, 33) contained therein.

2. Reagent kit according to claim 1, characterised in that one of the side walls (14, 15, 16, 17) of the casing (12) bears a machine-readable label (28).

3. Reagent kit according to claim 1, characterized in that the lid (18) has pre-punched places (56, 57) which can be opened by a spike (67).

## Revendications

1. Kit de réactifs, comprenant au moins un récipient contenant un réactif, chacun des récipients à réactifs étant fermé par une fermeture (34, 35, 36) pouvant être perforée par l'aiguille de pipettage du dispositif de pipettage de l'appareil d'analyse, la fermeture se refermant cependant à l'endroit perforé dès que l'aiguille de pipettage est enlevée,
lequel kit de réactifs est caractérisé en ce que
qu'il est essentiellement composé d'un boîtier (12) parallèlépipédique, qui comporte un fond (13), des parois latérales (14, 15, 16, 17) et un couvercle (18) amovible, et de récipients à réactifs (31, 32, 33) amovibles contenus dans ledit boîtier (12),
ledit couvercle (18) présentant des ouvertures (21, 22, 23) qui permettent d'accéder aux contenus des récipients à réactifs (31, 32, 33) pour des opérations de pipettage effectuées automatiquement,
ledit couvercle (18) comprenant des ailettes (24, 25, 26, 27) appropriées à être saisies par un preneur (66) appartenant à un dispositif de transport, et
le fond (13) et le couvercle (18) du boîtier (12) présentant des ouvertures (41 - 44 respectivement 51 - 54) opposées qui permettent une circulation d'air dans le boîtier (12) et autour des récipients (31, 32, 33) contenus dans ce dernier.

2. Kit de réactifs selon la revendication 1, caractérisé en ce que
l'une des parois latérales (14, 15, 16, 17) du boîtier (12) porte une étiquette lisible par machine.

3. Kit de réactifs selon la revendication 1, caractérisé en ce que
le couvercle (18) présente des parties prépoinçonnées (56, 57) pouvant être ouvertes à l'aide d'un mandrin (67).
